# EUROPEAN PATENT SPECIFICATION

(11) **EP 0 788 312 B1**
(45) Date of publication and mention of the grant of the patent: **26.09.2001**
(21) Application number: 94917838.8
(22) Date of filing: 27.05.1994
(51) Int. Cl.: A23B 4/00, A23L 1/325

(54) **METHOD FOR PRODUCING DRIED FISH SNACKS AND FISH SNACKS PRODUCED BY THE METHOD**
VERFAHREN ZUR HERSTELLUNG VON GETROCKNETEN FISCHSNACKS UND DIE HERGESTELLTE FISCHSNACKS
PROCEDE PERMETTANT DE PRODUIRE DES EN-CAS A BASE DE POISSON SECHE ET EN-CAS DE POISSON AINSI PRODUITS

(30) Priority: 28.05.1993 NO 931966; 25.03.1994 NO 941127
(43) Date of publication of application: 13.08.1997
(73) Proprietor: Rekkedal, Bjarne, 6011 Alesund (NO)
(72) Inventor: SUNDNES, Jan S., N-6015 Alesund (NO); REKKEDAL, Bernhard, N-6011 Alesund (NO); HATLO, Bjorn Magne, N-6008 Alesund (NO)
(74) Representative: Jones, David Colin
(86) International application number: NO9400100
(87) International publication number: WO9427447

(56) References cited:
- US-A- 4 126 705
- DIALOG INFORMATION SERVICES, File 351, WPI 81-93, Dialog Accession No. 009310019, WPI Accession No. 93-003482/01, KITANIHON SHOKUHIN KK: "Prepn. of Fish-Snack - Includes Removing Organs and Scales, Cutting Deeply a Number of Times to Bones, Washing, Soaking in Seasoning Soln. and Drying"; & JP,A,4 330 266, 921118, 9301, (Basic).

## Description

The invention concerns a method for producing snack products of fish, containing various amounts of fat, preferably of fish species with high contents of a fat, and dehydrated fish-snacks.

In later years, there has been an increasing need of snack products, which in this description mean products processed by dehydration until a crispy consistence is obtained, in which qualities like taste, food value and colour is maintained. Examples are potato chips, bacon crisps and stockfish-snacks, etc. The average yearly consumtion of potato chips in Norway, is approximately 2,5 kg per person, mainly consumed between meals and in social events. According to this there is considerable market for products of this category.

Snack products have mainly been produced by exposing the foodstuffs for a high temperature treatment, for instance deep frying. This type of processing causes denaturation of the proteins, and the vitamins of the product will generally disappear during such high-temperature treatment. Further, the original fatty acids of the raw material will melt and leave the product. The end product may also have a very high energy content since the fat in the fryer often replaces the original fatty components. This is an element which is presently highly unwanted since modern people, because of health reasons show an increasing interest in light products with low contents of calories as well as unwanted fatty acids. In addition it is often of a certain interest to maintain selected fatty acids in the product, due to taste as well as reasons of health.

Fish is a foodstuff which has long traditions in representing healthy foods, since fish fat in a larger degree than animal fat contains unsaturated fatty acids, and fish fat contains a particularly high rate of so called Ω-3 fatty acids, which is regarded beneficial for the cardiac system. In addition, there is in Norway an industrial need for new methods concerning fish processing. This is illustrated by the fact that figures from the Central Statistical Bureau (Statistisk Sentralbyrå) show that of the entire Norwegian foreign trade, round and gutted salmon alone amounts to almost eight times larger income than all processed salmon products together.

Medium fatty and fatty fish species, that is species where the content of fat is above approximately 5 %, such as salmon, halibut and trout, have been regarded as unsuited for drying, because that during the process, the fat turns rancid, which will reduce the taste quality. Further it is important that the qualities of the raw material, such as colour, nutritional, value, etc. is maintained in the final product which in this product cathegory should be defined as crispy and delicious. Up to now a dry and crispy snack product based on fatty fish, for example salmon has not been produced by a dehydration process.

GB-A-2197174 is a patent application regarding a method to make fish snacks, in which the raw material is smoked or in other ways pre-processed, for instance smoked salmon. In this procedure the raw material is rasped and cooked, baked, fried or deep fried, and is thereby exposed for temperatures above 100 degrees centigrades, and in the deep fryer from 180-200 degrees centigrades. By deep frying or cooking, the proteins in the product will denaturate and most of the nutritional components including fatty acids are removed from the product and dissolved in the water or the frying fat, where they are either destroyed by high temperature, such as destruction of certain vitamins, or irreversibly removed from the product. By deep frying the product will absorb about 10 % extra fat during the treatment. In addition such high temperature treatment leads to extremely low durability whitout adding considerable amounts of preservatives.

A similar method for processing meat and fish is known from FR-PS 1599542, in which the raw material through several production steps is exposed to salting, trimming (removing fat, etc. by knife) and eventual frying or grilling to remove fat, carving or bone removing and air drying by 20-25°C and/or smoking, additional carving or cutting and finally drying and smoking until rest humidity of 3 %.

This method, which results in a dried, smoked product in the shape of strips, granulate or powder, concerns a high temperature treatment which to a high degree will remove the fat and denaturate the proteins in the product, or without the high temperature treatment, the fat will remain in the product and give reduced taste quality because the fat turns rancid. In addition, the final product will by this procedure not have its natural colour and look, which is necessary for a snack product, since the procedure causes the product's look to be totally unlike the raw material's colour.

There have been carried out several attemps to dry light salted, light smoked salmon. Cubes which at first was frozen until 80°C below zero. (Hansen, G.T. Nyvold, T.E. Ofstad, R. Drying Salmon, FTFI Inform, no. 2. May 1990).The drying metods comprised freeze-drying, heat-pump drying in a clip fish dryer and air drying at temperatures below freezing, and the product was packed in airtight bags and stored for 3 months. The drying process lasted from 6 to 14 days. The products from the low temperature drying had the least smoke odour and taste, but most stockfish odour, and the colour had turned yellow, while the heat-pump dried product was more red than yellow in colour. The freeze-dried product turned even more yellow during storage. In this way the produced product did not have colour and taste quality of satisfaction.

US-A-4 126 705 is directed to a process of protein preservation comprising the steps of cutting a mass of raw protein material in frozen condition, thawing and mixing the slices with a flavoring composition, removing entrapped air by vacuum, tamping or vibration while maintaining the material at a temperature above freezing and then freezing the material into a compact mass, cutting the solid mass into sections and dehydrate the material.

This method cannot be used for processing fat fish into dry, crisp snack products, since it is directed to preferably lean protein material and, when the start material is fatty, the fat will turn rancid and the final product will present fatty surfaces and taste unlike the start material.

The prior art does not comprise procedures directed to maintain the look of the raw materials such as colour and texture, and certain fatty acids, but comprises treatments which denaturates proteins, and facilitates the fat turning rancid.

There is therefore a purpose with the present invention, to provide a method of drying to produce crispy and delicious snacks made from preferably fat fish, without changing the quality of the raw materials, such as colour, taste and contents of favourable nutritional contents, including specified fatty acids, by an industrial applicable procedure which is rapid and where the investments are as low as possible.

These objects are achieved by the present invention, characterized by the claims.

The present invention concerns a method of producing fish-snacks from pre-processed or not pre-processed fish, indenpendent of a high fat content in the fish comprising that the raw material, for instance filets from smoked salmon are fully trimmed and cut into suitable slices. The slices are immersed into a fluid with a temperature between 30 and 90°C, containing water, salt, vinegar, preservatives and spices, for 1-180 seconds, depending on the thickness of the slices. After this hot bath, the slices are rapidly transfered into a cold bath containing water, salt, spices and vinegar, with temperature between the freezing point and 30°C, so that the difference of temperature between the hot and cold bath is at least 25°C. for 1 sec to 1 hour. Eventually the slices are put on perforated material for dehydration, at a temperature between 0 and 50°C for 2-48 hours, or are frozen at a temperature between -5 and -25°C for 1-48 hours, with following dehydration for 2-48 hours at a temperature between 0 and 50°C, or are exposed to freeze drying in a suitable unit. Freeze drying is executed at -10 to -30°C in a vacuum atmosphere of inert gas, for example N₂ which displaces O₂ and hereby prevents rancidity of the fatty acids. The final product has a light and crispy consistency with the taste and colour of the raw material. By freeze drying the product becomes a bit more porous.The invention also concerns the product made by the described procedure, which contains Omega-3 fatty acids.

The method according to the present invention will in the following be described in detail by use of un-smoked and smoked fish as raw material.
A) The raw material in the shape of smoked salmon filets are fully trimmed and cut into slices with 1-20 mm thickness, preferably 2,5 mm.
B) The slices of the raw material processed according to step A, are immersed in a hot bath with temperature between 30 and 90°C, preferably between 50 and 70°C, most preferable 60°C for 1-180 seconds, preferably 3-15 seconds, most preferable 10 seconds. This hot bath contains water, 0,01 %-5 % of a 7 % commercial vinegard solution, 0,01 %-5 % NaCl and 0,01 %-1 % antioxidant. The purpose of the stay in this bath is to simplify the following dehydration by removing excess fatty acids from the fish meat including "loosening" the muscle fibres so that the fat easier can depart.
C) After being immersed in the hot bath, according to step B, the slices are rapidly transfered to a cold bath with temperatures between the temperature where freezing is initiated and 30°C, so that the difference between the hot and cold bath at all times is at least 25°C, preferably the temperature at which freezing is initiated and 5°C, most preferably approximately 0°C, comprising water, 0,01 % -5 % NaCl, 0,01 %-1 % antioxidant, for instance asorbic acid and, possibly 0-5 % of a 7 % commercially avaitable vinegar solution. The stay in the cold bath is between 1 sec and an hour, preferably 10-1200 seconds, most preferably 900 seconds.

This quick change in the temperature in the slices produces contraction of the muscle-fibres, and more fat is sqeezed out, so that the slices obtain a harder consistence. The removal of some of the fat contents in step B and C, causes the "wanted" fatty acids, such as Omega-3 fatty acids, during the following dehydration to be absorbed in the meat and stabilized. This process seems therefore to produce a less fatty product during maintanence of some wanted fatty acids, such as Omega-3, contrary to the product of high temperature treatment such as deep frying or cooking (GB-A-2197174), in which process all of the fat melts and leaves the product.

D1) When the slices of raw material have gone through step A-C, they are placed on a grating in a suitable drying unit for air-drying at temperatures from 0-50°C, preferably 15-40°C, most preferably 25°C for 2-48 hours. The products appearance (flat or curly shape) can be decided in advance by placing the product on the gratings in the wanted shape. By placing the slices horisontally, a flat product is obtained, and by vertical placement a more curly product is obtained. After dehydration the product contains between 5 % and 30 % water. The product may also be frozen at -5 to-25°C for 1-48 hours, after the cold bath treatment before it is dried according to step D1.

D2) Freeze drying of the product exposed to step A-C is done at a temperature between -10 and - 30°C in a vacuum atmospehere, mainly containing inert gas, for example N₂, which by displacing O₂, helps preventing fat rancidity. The period of freeze drying is preferably from 1-24 hours. The freeze dried product is a bit more porous than the air dried product, but the raw materials colour is maintained and it has a crispy consistency. The water content of the freeze dried product, is preferably between 5 and 30 %, estimated from the product's total weight.

In a further embodiment, the raw material may be unsmoked fish products, and when processed through step A-D1 or D2, a similar product is obtained, now without the typical "smoked taste".

In still a further embodiment the raw material may be unsmoked fish, and the drying process in step D1 may be combined with a smoking-process in a suitable unit. The final product will in this case obtain the typical "smoked" taste.

The present process of dehydration is especially suitable for producing dried snack products from fat fish species, for instance certain flat-fish, such as Halibut (Hippoglossus hippoglossus) and Greenland Halibut (Reinhardtius hippoglossoides) and Salmonidae, such as Trout (Salmo trutta.), Salmon (Salmo salar) and Rainbow trout (Salmo gardneri), Red-bellied trout (Salvelinus fontinalis), Char (Salvenius alpnus), Pacific Salmon, such as Pink Salmon (Oncorhynchus gorbuscha), Sockeye (Oncorhynchus nerka), Chum (Oncorhynchus keta), Coho (Oncorhynchus kisutch) and Chinook (Oncorhynchus tschawytscha).

The invention will be illustrated by following examples.

### EXAMPLE 1.

In this example, the raw material is smoked salmon filets. Following amounts and concentrations in the baths were used:

| | | |
|---|---|---|
| Raw material | | 940 grams smoked Salmon (Salmo salar) |
| Baths | Hot | 10 1 Water (Warm bath or blanching bath) |
| | | 0,1 1 Vinegar (7 % solution) |
| | | 0,1 Kg NaCl |
| | Cold | 10 1 Water |
| | | 0,04 Kg NaCI |
| | | 0,001 Kg Ascorbic acid. |

### Procedure:

The filets were skinned and cut into slices (thickness 3-5 mm).

Next the slices were exposed to the hot bath (temp. 50-60°C) containing water, NaCl and vinegar in the above mentioned concentrations. The slices were immersed for 3-5 seconds and were next transferred to the cold bath (temp. 0-4°C) containing water, NaCl and ascorbic acid in the above mentioned concentrations. The slices were immersed for about 10-30 seconds, and were then placed on a grating in a Fessmann smoking chamber, programmed for dehydration, where the amount of air pumped in equalled 1,5 times the volume let out, to make the process procedure under a small hyper-pressure.

Drying temperature was 30°C and the time 12 hours.

The product obtained hereby an adequate dehydration, that is between 15-25 % and had a crispy consistency. The colour was also adequat according to the colour requirements for salmon (coloured as natural for the species).

The aroma and taste was round and excellent.

The final product was packed in vacuum bags in a gas mixture containing 70 % N₂ and 30 % CO₂.

### EXAMPLE 2.

This example demonstrates the effect of different combinations of hot and cold baths, on factors such as taste, colour, surface fat, salinity, contents of water, fat and proteins, and also the degree of brittleness. The composition of fat is measured in a preferable embodiment. It was used cold smoked, sliced and vacuum packed salmon filets delivered by Delfa AS, Stranda, Norway. The smoked salmon had the following nutritional value:
Fat: 10,5 %, Water: 63,67 %, Protein: 20,38 % and NaCl: 2.2 %.

Three different hot baths, HB1, HB2 and HB3 were used. The maintainance of the temperature was performed by a 1000 W heating coil which was held by hand, and also used to stir the hot bath.

The compositions of the hot baths are shown in Table 1.

**TABLE 1**

| The baths' composition and temperature, and time in bath. Drying process paramters. | | | | | |
|---|---|---|---|---|---|
| Hot bath | Temp. | Time | NaCl | Vinegar | Antioxidant |
| HB1 | 60°C | 5 sec. | 4 % | 2 % | 5 g/l |
| HB2 | 60°C | 10 sec. | 2 % | 2 % | 5 g/l |
| HB3 | 60°C | 15 sec. | 1 % | 2 % | 5 g/l |
| | | | | | |
| Cold bath | | | | | |
| CB1 | -2,0°C | 30 sec. | 5 % | 4 % | 5 g/l |
| CB2 | -1,0°C | 5 min | 2 % | 2 % | 5 g/l |
| CB3 | -0,5°C | 15 min | 0,5 % | 0 % | 5 g/l |
| | | | | | |
| Drying process | | | | | |
| D1 | 23°C | 24 h | r.f. 0,28 | | |
| D2 | -12°C | 24 h | r.f. 0,45 | | |
| D3 | 25°C | 24 h | r.f. 0,25 | | |
| FB | -12°C | 24 h | r.f. 0,45 | | |

### Cold bath.

Three different cold bath treatments, CB1, CB2 and CB3 were used. The cold baths were mixed from ice and water, and the temperature was measured to make sure it was maintained within the wanted ranges. The composition of cold baths is shown in Table 1.

### Drying device.

It was mainly used a drying channel, with the product horrisontally placed on trays in shelves with a horrisontall air passage. This drying device is based on closed air circulation and heat pumping, to regulate the drying conditions independent of the outdoor climate. In addition a Fluid Bed Dryer (FB), based on heat pumping, was used under the same temperatures as the channel dryer, but the raw material was here placed in a fludized layer. The drying steps D1, D2 and FB were used as shown in Table 1.

### Laboratory analyses.

### Water content/Dry substance.

Water content/Dry substance content was measured in all samples after the hot nad cold bath, and after drying. Method no. 3 of the Norwegian Central Laboratory was used.

### Salinity

Salinity was measured in all samples after the hot and cold baths. It was not measured after drying since dehydration does not remove any NaCl. The Norwegian Central Laboratory's method no. 49 was used. "Chlorid contents in fish and fish products".

### Fat analysis.

Fat analysis was performed according to Norwegian Central Laboratory's method no. 36: "Fat in hydrous organic material. The ethyl acetate method".

### Protein analysis

Analysis of total protein was performed after the cold bath in all combinations, including the raw material and spot checks after drying. The protein analysis was performed according to Norwegian Central Laboratory's method no. 1.

### Water activity measurement.

Water activity was measured in all samples in a Novasina Thermoconstanter, containing one sample chamber.

The device was calibrated at 98 % and 53 % according to reference tables supplied by Novasina.

### Sensoric

The product's taste, degree of saltiness, crispness, surface fat and colour were evaluated by a panel of 5 persons of both sexes. The product was classified according to a score table from 0-6, where 6 was the best score, and there was attached great importance to the fact that the classifications were made according to how the persons experienced the parameters. Regarding surface fat the least fatty surface was given highest score. The scores are expressed as averaged values from all the single scores.

### Results

### Dryness/Water content.

Table 2 shows the product's degree of dryness, where X represents water content measured in % of hydrous mass, Y is water content pr. kg. dry substance, and salinity is estimated as % of mass on moist base, and water activity (Aw.), is measured directly in the sample.

The first sample is taken right after the bath, the rest after drying, respectively D1, D2 and FB.

### Fat content.

Table 3 shows the fat content of the raw material and in samples after hot and cold baths. Some of the combinations gives a fat content higher than the raw material, and it is here to be presumed that it is caused by natural variations from one fish to another, since none of the baths are able to supply any fat.

### Protein content.

Protein content in the different samples is listed in Table 4. The percentage of protein is based on percent of total, that is hydrous, mass, while percentage of the protein in dry substance is calculated on the basis of anhydrous dry substance, which also comprises fat.

### Taste and appearence

Table 5 shows the results of the panel's classification of the samples.

### Discussion

Regarding the fat content it seems like the combination CB2 gives the lowest percentage of fat. Based on the taste samples, the combination D2, HB2, CB3 was chosen as the most promising alternative.

Gass chromatographic examinations of the fat fraction after this treatment gave the following composition of unsaturated fatty acids called Omega-3 fatty acids.

This analysis showed the following results:
C18:3;0,9 %
C18:4;2,4 %
C20:4;1,5 %
C20:5;7,5 % (=EPA)
C22:5;2,6 %
C22:6;11,4 % (=DHA)
Amount Omega-3:26,3 %

The share of Omega-3 fatty acids is considerably higher than in salmon in nature, (breeded salmon contains 20,4 %) and may possibly be due to washing out of free oils (with low content of Omega-3) in baths containing vinegar.

Regarding the protein content, the combination HB3, CB2 and HB3, CB3 seem to give a protein content in the dry substance which is somewhat higher in the cold bath than in the raw material. This might be due to washing out of dry substance of another kind, for instance fat. The samples with the best sensoric quality had little or none washing out of protein, and the washing out of protein does not seem to be of concluding matter for the quality. When it comes to the significance of the baths, it seems like the hot baths control the fat content, and the degree of washing out of protein, something which seems reasonable because of the fact that the heat increases the solubility if the fat and leads to reduced washing out of protein because of denaturation. Concerning the drying process it seems like the D2 samples give better results in terms of less shrinking of the product. This was also confirmed by spot tests. Repeating D2, HB2 and CB3 showed that the process was reproducible.

This example gave results which indicate that the method gives a product with acceptable sensoric quality, such as mainly taste, degree of crispness, colour and surface fat. The heat treatment seems to a large degree to regulate the sample's fat content and the following washing out of protein, while the duration of the cold bath seem to regulate salinity and salty taste, while the drying step and the shrinking affected the surface fat.

**Table 2.**

| The Product's degree of dryness and salinity. | | | | |
|---|---|---|---|---|
| After bath | X | Y | NaCI | Aw |
| HB1CB1 | 64,1 | 1,79 | 3,19 | 96,6 |
| HB1CB2 | 64,22 | 1,79 | 3,01 | 97,7 |
| HB1CB3 | 67,75 | 2,10 | 1,27 | 98,4 |
| HB2CB1 | 65,05 | 1,86 | 2,33 | 97,3 |
| HB2CB1R | 66,86 | 2,02 | 2,19 | 97,2 |
| HB2CB2 | 66,56 | 1,99 | 2,65 | 97,6 |
| HB2CB3 | 66,7 | 2,00 | 1,25 | 99,5 |
| HB3CB1 | 64,13 | 1,79 | 2,53 | 97,6 |
| HB3CB2 | 67,85 | 2,11 | 1,63 | 98,9 |
| HB3CB3 | 68,85 | 2,21 | 1,84 | 98,2 |
| | | | | |
| After drying | | | | |
| D1HB1CB1 | 15,93 | 0,19 | 7,47 | 65,4 |
| D1HB1CB2 | 15,59 | 0,18 | 7,10 | 69,5 |
| D1HB1CB3 | 14,4 | 0,17 | 3,37 | 67,5 |
| D1HB2CB1 | 19,23 | 0,24 | 5,38 | 72 |
| D1HB2CB1R | 15,81 | 0,19 | 5,56 | 62,2 |
| D1HB2CB2 | 14,67 | 0,17 | 6,76 | 66,8 |
| D1HB2CB3 | 14,54 | 0,17 | 3,12 | 68,1 |
| D1HB3CB1 | 16,35 | 0,20 | 5,90 | 67,9 |
| D1HB3CB2 | 19,13 | 0,24 | 4,10 | 71,4 |
| D1HB3CB3 | 16,97 | 0,20 | 4,90 | 71,1 |
| D2HB1CB1 | 12,65 | 0,14 | 7,76 | 58,4 |
| D2HB1CB2 | 12,72 | 0,15 | 7,34 | 60,9 |
| D2HB1CB3 | 12,95 | 0,15 | 3,43 | 64,9 |
| D2HB2CB1 | 13,15 | 0,15 | 5,79 | 63,4 |
| D2HB2CB2 | 9,55 | 0,11 | 7,17 | 55,5 |
| D2HB2CB3 | 12,45 | 0,14 | 3,29 | 53,5 |
| D2HB3CB1 | 14,06 | 0,16 | 6,06 | 58,9 |
| D2HB3CB2 | 13,41 | 0,15 | 4,39 | 62,1 |
| D2HB3CB3 | 12,76 | 0,15 | 5,15 | 63,1 |
| FBHB3CB3 | 22,62 | 0,29 | 4,57 | 83,0 |

**Table 3.**

| Fat content in raw material, and in samples after hot and cold baths. | |
|---|---|
| Bath number | Fat content, % |
| Raw material | 10,50 |
| HB1CB1 | 13,10 |
| HB1CB2 | 11,08 |
| HB1CB3 | 12,53 |
| HB2CB1 | 12,15 |
| HB2CB1 Repeat | 8,40 |
| HB2CB2 | 11,48 |
| HB2CB3 | 12,55 |
| HB3CB1 | 13,20 |
| HB3CB2 | 7,58 |
| HB3CB3 | 9,73 |

**Table 4.**

| Percentage of protein and protein percentage in dry substance in raw material, and after the different baths. | | |
|---|---|---|
| Test | Protein % | % protein in dry substance |
| Raw material | 20,38 | 56,10 |
| HB1CB1 | 18,89 | 52,62 |
| HB1CB2 | 19,89 | 55,59 |
| HB1CB3 | 16,41 | 50,88 |
| HB2CB1 | 16,90 | 48,35 |
| HB2CB1 Repeat | 21,38 | 64,51 |
| HB2CB2 | 17,40 | 52,03 |
| HB2CB3 | 18,39 | 55,25 |
| HB3CB1 | 18,89 | 52,66 |
| HB3CB2 | 19,88 | 61,85 |
| HB3CB3 | 18,39 | 59,04 |

**Table 5.**

| The panel's classification. | | | | | |
|---|---|---|---|---|---|
| Test | Taste | Saltiness | Crispness | Surface fat | Colour |
| D1HB1CB1 | 3,25 | 3,75 | 2,40 | 1,75 | 5,0 |
| D1HB1CB2 | 4,00 | 3,75 | 2,40 | 0,80 | 4,0 |
| D1HB1CB3 | 2,75 | 2,00 | 2,50 | 0,80 | 4,5 |
| D1HB2CB1 | 3,20 | 3,50 | 2,20 | 0,70 | 5,0 |
| D1HB2CB1R | 3,50 | 3,10 | 2,80 | 2,30 | 5,0 |
| D1HB2CB2 | 3,50 | 3,00 | 3,00 | 1,90 | 5,0 |
| D1HB2CB3 | 3,50 | 2,60 | 4,00 | 1,75 | 4,0 |
| D1HB3CB1 | 3,20 | 2,50 | 2,50 | 0,00 | 4,5 |
| D1HB3CB2 | 2,75 | 3,00 | 2,20 | 0,00 | 4,5 |
| D1HB3CB3 | 3,50 | 2,75 | 3,25 | 1,00 | 3,0 |
| D2HB1CB1 | 4,00 | 3,25 | 3,75 | 3,70 | 2,5 |
| D2HB1CB2 | 3,75 | 3,20 | 3,25 | 2,75 | 4,0 |
| D2HB1CB3 | 4,25 | 2,50 | 4,30 | 4,90 | 2,0 |
| D2HB2CB1 | 4,50 | 3,25 | 3,50 | 4,10 | 3,5 |
| D2HB2CB2 | 4,20 | 4,30 | 4,10 | 4,40 | 4,0 |
| D2HB2CB3 | 4,75 | 2,50 | 5,25 | 5,00 | 2,0 |
| D2HB3CB1 | 4,00 | 3,60 | 3,25 | 3,90 | 3,0 |
| D2HB3CB2 | 3,70 | 3,00 | 4,00 | 4,40 | 3,0 |
| D2HB3CB3 | 4,10 | 2,75 | 4,00 | 4,40 | 4,0 |
| FBHB3CB3 | | | | | |

### Example 3-7

In example 3 to 7 food stuffs are produced according to the invention, from different species of fat fish.

### Example 3.

### Herring (Clupea harengus)

Raw material 650 g smoked herring.

| Recipe codes: | | | | | |
|---|---|---|---|---|---|
| | Temp. | Time | NaCI | Vinegar | Antioxidant |
| Hot bath | 60°C | 10 sec. | 2 % | 2 % | 5 g/l |
| Cold bath | 0°C | 15 min. | 0,5 % | 0 % | 5 g/l |

### Drying process:

| | |
|---|---|
| Time | 24 hours |
| Temp. | 25°C |
| Air speed | 1 m/sec. |

### Method:

The herring was fileted, trimmed and then cut into pieces sized approximately 1 x 4 cm. Then they were placed on gratings for immersing in the baths. The skin was not removed. Hot and cold baths were made according to the recipe above, with a total volume of 10 litres. The pieces went through hot and cold baths according to the above parameters.

### Results:

After drying the pieces were taken out for visual and sensoric evaluation. Next the product was packed in foil-bags. The product's appearance was as expected not of the best, and did not give the exclusive look as the product made from salmon. However, there was no sign of rancidity, and the taste revealed immediately the characteristic "herring taste". Because of the thickness of the pieces and the fact that they were dried with skin, they were somewhat "softer" in the middle but had a crispy surface.

### Example 4.

### Fresh (unsmoked) salmon (Salmo salar)

Raw material: 1050 g fresh salmon filèts.

| Recipe codes: | | | | | |
|---|---|---|---|---|---|
| | Temp. | Time | NaCl | Vinegar | Antioxident |
| Hot bath | 60°C | 10 sec. | 2 % | 2 % | 5 g/l |
| Cold bath | 0°C | 15 min. | 0,5 % | 0 % | 5 g/l |

### Drying process:

| | |
|---|---|
| Time | 24 hours |
| Temp. | 25°C |
| Air speed | 1 m/sec |

### Method:

The filèts were sliced into pieces with thickness of approximately 3-5 mm, and then placed on gratings for immersing in the baths. Hot and cold baths were mixed according to the recipe above, with a total volume of 10 1. Next the slices went through the hot and cold baths also according to the recipe. Finally the gratings with product were placed in a drying unit, adjusted to the given parametres for the drying process.

### Results:

After drying, the product was removed from the drying chamber for visual and sensoric evaluation. Afterwards the rest was packed in foilbags. The product's appearance was more than adequate with a delicious red colour, which is characteristic for the species, however, somewhat less red than a product based on smoked raw material. The product both looked and tasted good, but the characteristic "smoked" taste was missing. Degree of dryness and crispness was completely satisfactory.

### Example 5.

### Mackerel (Scomber scombrus)

Raw material: 900 g smoked makerel filèt.

| Recipe codes: | | | | | |
|---|---|---|---|---|---|
| | Temp. | Time | NaCl | Vinegar | Antioxidant |
| Hot bath | 60°C | 10 sec. | 2 % | 2 % | 5 g/l |
| Cold bath | 0°C | 15 min. | 0,5 % | 0 % | 5 g/l |

### Drying process:

| | |
|---|---|
| Time | 24 hours |
| Temp. | 25°C |
| Air speed | 1 m/sec. |

### Method:

The mackerel filèts were sliced to a thickness of 4-6 mm, and afterwards put on gratings for immersing in the baths. Hot and cold baths were prepared according to the recipe above, with a total volume of 10 1. Then the slices were immersed in the hot and cold baths according to the recipe. Finally the gratings with the product were placed in a drying unit, adjusted to the given parametres for the drying process.

### Result:

After drying the product was subjected to visual and sensoric evaluation. Then the rest of the product was packed in foil bags. The product's look was adequate with a colour characteristic for the species. The product had a very good tast, that is, it had a fresh but characteristic taste without any sign of rancidity. The degree of smoking of the raw material was here in our opinion very good. The pieces obtained a satisfactory consistency and had an adequate degree of dryness. It seems like it was easier in the mackerel to obtain a porous consistency than for example in the salmon produced according to the present method, since the pieces seemed a bit more "fluffy". The product's degree of crispness was thus very satisfactory.

### Example 6.

### Greenland Halibut (Reinhardtius hippoglossoides)

Raw material: 750 grams smoked Greenland Halibut

| Recipe codes: | | | | | |
|---|---|---|---|---|---|
| | Temp. | Time | NaCl | Vinegar | Antioxidant |
| Hot bath | 60°C | 10 sec. | 2 % | 2 % | 5 g/l |
| Cold bath | 0°C | 15 min. | 0,5 % | 0 % | 5 g/l |

### Drying process:

| | |
|---|---|
| Time | 24 hours |
| Temp. | 25°C |
| Air speed | 1 m/sec. |

### Method:

The Greenland Halibut filèts was sliced to the thickness of 3-5 mm and then put on gratings for immersement in the baths. Hot and cold baths were mixed according to the recipe above, with a total volume of 10 1. Then the slices were immersed in the hot and cold baths, also according to the recipe. Finally the gratings with the product were placed in a drying unit adjusted to the given parameters for the drying process.

### Result:

After drying the product was subjected to visual and sensoric evaluation. Afterwards the rest of the product was packed in foil bags. The product looked exellent with a delicious, white colour, (characteristic for the species). Regarding taste the product was absolutely satisfactory, since there was no sign of rancidity. It might be desirable to smoke the raw material a little more, to obtain a "sharper" smoked taste. The slices obtained a satisfactory degree of dryness, and were all over equally dried. Further on, the product had the desired consistency, which is related to the production procedure. The product's degree of crispness was also satisfactory.

### Example 7.

### Trout (Salmo gairdneri)

Raw material: 600 grams smoked trout.

| Recipe codes: | | | | | |
|---|---|---|---|---|---|
| | Temp. | Time | NaCl | Vinegar | Antioxidant |
| Hot bath | 60°C | 10 sec. | 2 % | 2 % | 5 g/l |
| Cold bath | 0°C | 15 min. | 0,5 % | 0 % | 5 g/l |

### Drying process:

| | |
|---|---|
| Time | 24 hours |
| Temp. | 25°C |
| Air speed | 1 m/sec. |

### Method:

The trout filèts were sliced to the thickness of 3-5 mm, and afterwards placed on gratings for immersement in the baths. Hot and cold baths were prepared according to the recipe codes above, with a total volume of 10 1. Then the slices were immersed in the hot and cold baths, also according to the present procedure. Finally the gratings were placed in a drying unit adjusted to given parameters for the drying process.

### Result:

After drying the product was subjected to visual and sensoric evaluation. Then the rest of the product was packed in foilbags. The product's look was absolutely of satisfaction with a delicious red coloir, characteristic for the species, a bit more red than salmon. The product had a good tast, and tasted very similar to the salmon product. Regarding degree of dryness and crispness, the product was satisfactory in all matters. Further the general impression of the product was very similar to the salmon product, but as mentioned above, a bit more reddish.

The objects of the present examples was as mentioned earlier to investigate the effect of the procedure according to the invention, on other species than salmonides, which showed promising results. It was demonstrated that the combination of hot and cold baths together with dehydration of the tested species, independent of fat content, gave a crispy product, which will be very suitable as snack. It was of special interest to see the result of mackerel and Greenland Halibut since these are regarded as the known most fatty consumed fish. The procedure according to the invention is thus suitable for producing salmon products as well as products made from another species of fat fish.

## Claims

1. Method for producing a dried foodstuff product from smoked or unsmoked fat fish, **characterized in that**;
A: filèts of the fish are trimmed and cut in slices 1-20 mm thick;
B: the slices from step A are immersed for 1-180 sec in blanching/warm bath containing water, vinegar, sodium chloride, possibly antioxidant and/or spices with temperature between 30 and 90°C;
C: cold treatment of the slices from step B, by rapid transfer to a cold bath containing water, sodium chloride, antioxidant and possibly vinegar and/or spices with temperature between the temperature where freezing of the solution is initiated and 30°C, such that the temperature difference between the hot (B) and the cold (C) bath is at least 25°C, and immersing ths slices between 1 sec and 1 hour, and;
D1: the product from C is rapidly frozen to -5 to -25°C for 1 to 48 hours and/or rapidly transferred to a drying unit for air drying, where the slices are placed on gratings, vertical or horisontal, so that the product obtains a suitable shape, where the dehydratoin occurs at a temperature between 0°C and 50°C for 2-48 hours, until the water content has reached a level between 5 and 30 %, combined or not with smoking, or;
D2: rapid transfer of the slices from step C to a device for freeze drying, in which the slices are placed vertically or horisontally so that the product obtains a suitable shape, in which the dehydration occurs at a temperature between -10 and -30°C under vacuum in an atmosphere containing an inert gas, such as N₂, for 1 to 24 hours, until the water content has reached a level between 5 and 30 %.

2. Method according to claim 1, **characterized in that** the filèts (A) are cut in slices with thickness 3-5 mm, preferably 2,5 mm, that they (B) are immersed in the hot bath with a temperature between 50 and 70°C, preferably 60°C for 1-180 s, preferably 10 s, that they (C) thereafter are immersed in the cold bath with a temperature between the temperature where freezing is initiated and 5°C, preferably 0°C for 10 to 1200 s, preferably 900 s, and (D1) are frozen at -5°C to -25°C, preferably -12°C for 1-48 hours in order to be dehydrated in an air drying device at temperatures between 15 and 40°C, preferably 25°C for 24 hours.

3. Method according to claim 2 **characterized in that** the slices are immersed in a hot bath comprising an aquous solution containing 0.01 % to 5 % (vol/vol) vinegar, preferably 2 % of a 7 % vinegar solution. 0.01 % of 5 % (weight/volume) sodium chloride, preferably 2 %, 0,01 % to 1 % antioxidant, for example ascorbic acid, preferably 0,5 % and that the slices are immersed in a cold bath comprising an aquous solution containing 0,01 % to 5 % (weight/volume) sodium chloride, preferably 0,5 % and 0,01 to 0,5 % (weight/volume) antioxidant, for example ascorbic acid, preferably 0.5 %, and 0 % to 5 %, vinegar, preferably 0 %.

4. Dried foodstuff made from smoked or unsmoked fat fish, obtainable according to claim 1-3.

5. Dried foodstuff according to claim 4 **characterized in that** the product belongs to the salmonides, herring family, mackerel family and flat fish family.

6. Dried foodstuff according to claim 4-5,
**characterized in that** nutritionaly favourable fatty acids in the raw material are maintained in the product without sign of rancidity.

7. Dried foodstuff according to claims 4-6,
**characterized in that** the product at least maintain the colour and taste of the raw material, but has a more crispy consistency.

8. Dried foodstuff according to claim 4-7,
**characterized in that** the product's fraction of Omega-3 fatty acids is at least equal to that in the raw material, preferably larger.

## Patentansprüche

1. Verfahren zur Herstellung eines getrockneten Nahrungsmittelerzeugnisses aus geräuchertem oder nicht geräuchertem Fettfisch, **dadurch gekennzeichnet, daß**:
A: Filets des Fisches zurechtgeschnitten werden und in Scheiben einer Dicke von 1-20 mm geschnitten werden;
B: die Scheiben aus Schritt A für 1-180 s in ein Blanchier-/Warmbad mit einer Temperatur zwischen 30 und 90°C, das Wasser, Essig, Natriumchlorid, gegebenenfalls Antioxidationsmittel und/oder Gewürze enthält, eingetaucht werden;
C: die Scheiben aus Schritt B kalt behandelt werden, indem sie schnell in ein Kaltbad, das Wasser, Natriumchlorid, Antioxidationsmittel und gegebenenfalls Essig und/oder Gewürze enthält, mit einer Temperatur zwischen der Temperatur, bei der das Gefrieren der Lösung einsetzt, und 30°C, dergestalt, daß die Temperaturdifferenz zwischen dem Heiß-(B)- und dem Kalt-(C)-Bad wenigstens 25°C beträgt, überführt werden, und die Scheiben zwischen 1 s und 1 Stunde eingetaucht werden; und;
D1: das Erzeugnis aus C schnell auf-5 bis -25°C für 1 bis 48 Stunden gefroren wird und/oder schnell in ein Trockengerät zur Lufttrocknung überführt wird, in dem die Scheiben auf (Gitter)-Rosten vertikal oder horizontal plaziert werden, dergestalt, daß das Erzeugnis eine geeignete Form erhält, wobei die Dehydratisierung bei einer Temperatur zwischen 0°C und 50°C für 2-48 Stunden erfolgt, bis der Wassergehalt einen Wert zwischen 5 und 30 %, mit Räuchern kombiniert oder nicht kombiniert, erreicht hat, oder;
D2: die Scheiben aus Schritt C schnell in eine Vorrichtung zur Gefriertrocknung überführt werden, in der die Scheiben vertikal oder horizontal plaziert werden, dergestalt daß das Erzeugnis eine geeignete Form erhält, in der die Dehydratisierung bei einer Temperatur zwischen -10 und -30°C unter Vakuum in einer Atmosphäre, die ein inertes Gas, wie N₂ enthält, für 1-24 Stunden erfolgt, bis der Wassergehalt einen Wert zwischen 5 und 30 % erreicht hat.

2. Verfahren nach Anspruch 1, **dadurch gekennzeichnet, daß** die Filets (A) in Scheiben einer Dicke von 3-5 mm, vorzugsweise von 2,5 mm, geschnitten werden, daß sie (B) in ein Heißbad mit einer Temperatur zwischen 50 und 70°C, vorzugsweise 60°C, für 1-180 s, vorzugsweise 10 s, eingetaucht werden, daß sie (C) daraufhin in ein Kaltbad mit einer Temperatur zwischen der Temperatur, bei der das Gefrieren einsetzt und 5°C, vorzugsweise bei 0°C für 10 bis 1200 s, vorzugsweise für 900 s, eingetaucht werden und (D1) bei -5°C bis -25°C, vorzugsweise bei -12°C für 1-48 Stunden gefroren werden, um in einer Lufttrocknungsvorrichtung bei Temperaturen zwischen 15 und 40°C, vorzugsweise bei 25°C für 24 Stunden dehydratisiert zu werden.

3. Verfahren nach Anspruch 2, **dadurch gekennzeichnet, daß** die Scheiben in ein Heißbad eingetaucht werden, das eine wäßrige Lösung aufweist, die 0,01 % bis 5 % (Vol/Vol) Essig, vorzugsweise 2 % einer 7 %-igen Essiglösung, 0,01 % bis 5 % (Gewicht/Volumen) Natriumchlorid, vorzugsweise 2 %, 0,01 % bis 1 % Antioxidationsmittel, beispielsweise Ascorbinsäure, vorzugsweise 0,5 %, enthält und daß die Scheiben in ein Kaltbad eingetaucht werden, das eine wäßrige Lösung aufweist, die 0,01 % bis 5 % (Gewicht/Volumen) Natriumchlorid, vorzugsweise 0,5 %, und 0,01 bis 0,5 % (Gewicht/Volumen) Antioxidationsmittel, beispielsweise Ascorbinsäure, vorzugsweise 0,5 % und 0 % bis 5 % Essig, vorzugsweise 0 %, enthält.

4. Getrocknetes Nahrungsmittel, hergestellt aus geräuchertem oder nicht geräuchertem Fettfisch, erhältlich gemäß Anspruch 1 bis 3.

5. Getrocknetes Nahrungsmittel nach Anspruch 4, **dadurch gekennzeichnet, daß** das Erzeugnis zu den Lachsfischen, der Heringsfamilie, der Makrelenfamilie und der Plattfischfamilie gehört.

6. Getrocknetes Nahrungsmittel nach Anspruch 4-5, **dadurch gekennzeichnet, daß** die für die Ernährung günstigen Fettsäuren im Ausgangsmaterial im Erzeugnis ohne Anzeichen von Ranzigkeit erhalten bleiben.

7. Getrocknetes Nahrungsmittel nach den Ansprüchen 4-6, **dadurch gekennzeichnet, daß** das Erzeugnis wenigstens die Farbe und den Geschmack des Ausgangsmaterials beibehält, jedoch eine knusprigere Konsistenz hat.

8. Getrocknetes Nahrungsmittel nach Anspruch 4-7, **dadurch gekennzeichnet, daß** der Anteil des Erzeugnisses an Omega-3-Fettsäuren wenigstens gleich dem im Ausgangsmaterial ist, vorzugsweise größer ist.

## Revendications

1. Procédé pour produire une denrée alimentaire séchée de poisson gras fumé ou non fumé, **caractérisé en ce que**:
A. les filets du poisson sont parés et coupés en tranches de 1 à 20 mm d'épaisseur;
B. les tranches de l'étape A sont immergées pendant 1 à 180 s dans un bain chaud blanchissant contenant de l'eau, du vinaigre, du chlorure de sodium, probablement un antioxydant et/ou des épices avec une température comprise entre 30°C et 90°C;
C. le traitement à froid des tranches provenant de l'étape B, par transfert rapide dans un bain froid contenant de l'eau, du chlorure de sodium, un antioxydant et probablement du vinaigre et/ou des épices avec une température comprise entre la température où la congélation de la solution est amorcée et 30°C, de sorte que la différence de température entre le bain chaud (B) et le bain froid (C) est d'au moins 25°C et en immergeant les tranches entre 1 s et 1 heure; et
D1. le produit de C est rapidement congelé à une température de -5°C à -25°C pendant 1 à 48 heures et/ou rapidement transféré à une unité de séchage pour sécher à l'air, où les tranches sont placées sur des grilles, verticales ou horizontales, de sorte que le produit obtient une forme appropriée, où la déshydratation apparaît à une température comprise entre 0°C et 50°C pendant 2 à 48 heures, jusqu'à ce que la teneur en eau ait atteint une valeur comprise entre 5 et 30%
D2. le transfert rapide des tranches de l'étape C vers un dispositif de lyophilisation, dans lequel les tranches sont placées verticalement ou horizontalement de sorte que le produit obtient une forme appropriée, dans lequel la déshydratation apparaît à une température comprise entre -10°C et -30°C sous vide dans une atmosphère contenant un gaz inerte, tel que N₂, pendant 1 à 24 heures, jusqu'à ce que la teneur en eau ait atteint une teneur comprise entre 5% et 30%.

2. Procédé selon la revendication 1, **caractérisé en ce que** les filets (A) sont coupés en tranches avec une épaisseur de 3 à 5 mm d'épaisseur, de préférence 2,5 mm, qu'ils (B) sont immergés dans le bain chaud avec une température comprise entre 50°C et 70°C, de préférence à 60°C pendant 1 à 180s, de préférence 10s, qu'ils (C) sont ensuite immergés dans le bain froid avec une température comprise entre la température où la congélation est amorcée et 5°C, de préférence 0°C pendant 10 à 1 200 s, de préférence 900 s, et qu'ils (D1) sont congelés à une température de -5°C à -25°C, de préférence à -12°C pendant 1 à 48 heures afin d'être déshydratés dans un dispositif de séchage à l'air à une température comprise entre 15°C et 40°C, de préférence à 25°C pendant 24 heures.

3. Procédé selon la revendication 2, **caractérisé en ce que** les tranches sont immergées dans un bain chaud comprenant une solution aqueuse contenant 0,01% à 5% (vol/vol) de vinaigre, de préférence 2% d'une solution vinaigrée à 7%, 0,01% de 5% (poids/volume) de chlorure de sodium, de préférence 2%, 0,01% à 1% d'antioxydant, par exemple, l'acide ascorbique, de préférence 0,5%, et que les tranches sont immergées dans un bain froid comprenant une solution aqueuse contenant 0,01% à 5% (poids/volume) de chlorure de sodium, de préférence 0,5%, et 0,01% à 5% (poids/volume) d'antioxydant, par exemple, l'acide ascorbique, de préférence 0,5%, et 0% à 5% de vinaigre, de préférence 0%.

4. Denrée alimentaire séchée composé de poisson gras fumé ou non fumé pouvant être obtenue selon les revendications 1 à 3,

5. Denrée alimentaire séchée selon la revendication 4, **caractérisée en ce que** le produit appartient à la famille des salmonidés, des harengs, à la famille de maquereaux et à la famille des poissons plats.

6. Denrée alimentaire séchée selon les revendications 4 et 5, **caractérisé en ce que** les acides gras favorables sur le plan nutritionnel dans la matière première, sont conservés dans le produit sans signe de rancissement.

7. Denrée alimentaire séchée selon les revendications 4 à 6, **caractérisée en ce que** le produit conserve au moins la couleur et le goût de la matière première, mais possède une consistance plus croustillante.

8. Denrée alimentaire séchée selon les revendications 4 à 7, **caractérisée en ce que** la fraction du produit d'acides gras Oméga-3 est au moins égale à celle de la matière première, de préférence plus grande.
